(19)
**Europäisches Patentamt**
**European Patent Office**
**Office européen des brevets**

(11) **EP 4 559 872 A1**

(12) **EUROPEAN PATENT APPLICATION**

(43) Date of publication:
**28.05.2025 Bulletin 2025/22**

(21) Application number: **24205894.9**

(22) Date of filing: **10.10.2024**

(51) International Patent Classification (IPC):
*C01B 25/45* (2006.01)    *C01G 45/1221* (2025.01)
*H01M 10/0525* (2010.01)    *H01M 4/58* (2010.01)

(52) Cooperative Patent Classification (CPC):
**C01B 25/45; H01M 4/0471; H01M 4/366;**
**H01M 4/5825; H01M 10/0525**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.11.2023 CN 202311566671**
**06.03.2024 PCT/CN2024/080259**

(71) Applicant: **Eve Power Co., Ltd.**
**Jingmen, Hubei 448000 (CN)**

(72) Inventors:
- **WU, Tingting**
  **Jingmen, Hubei, 448000 (CN)**
- **LIU, Fanfen**
  **Jingmen, Hubei, 448000 (CN)**
- **WEN, Shengyao**
  **Jingmen, Hubei, 448000 (CN)**
- **CHEN, Meng**
  **Jingmen, Hubei, 448000 (CN)**
- **GAO, Jianhang**
  **Jingmen, Hubei, 448000 (CN)**

(74) Representative: **Murgitroyd & Company**
**165-169 Scotland Street**
**Glasgow G5 8PL (GB)**

(54) **LITHIUM MANGANESE IRON PHOSPHATE MATERIAL, PREPARATION METHOD THEREOF, AND LITHIUM BATTERY**

(57)    Disclosed are a lithium manganese iron phosphate material, a preparation method thereof, and a lithium battery. The lithium manganese iron phosphate material includes a core and a coating layer on the core. A material of the core includes Li, Fe, Mn, Nb, and $PO_4$ in a non-stoichiometric ratio, and a material of the coating layer includes any one or a combination of two of $LiNbO_3$ and $Li_3NbO_4$.

EP 4 559 872 A1

**Description**

<u>TECHNICAL FIELD</u>

The present disclosure relates to electrode materials, and more particularly, to a lithium manganese iron phosphate material, a preparation method thereof, and a lithium battery.

<u>BACKGROUND</u>

With the development of portable electronic devices, electric vehicles and large-scale energy storage markets, the demand for lithium batteries continues to grow. The positive electrode is one of critical components in the lithium battery, and positive electrode materials have an important influence on the performance of the lithium battery. Olivine-type positive electrode materials have advantages of high safety performance and low cost, and lithium manganese iron phosphate and lithium iron phosphate are two of the olivine-type positive electrode materials. The lithium iron phosphate has high safety and cycle life, but it cannot meet the requirements of higher energy density due to its low voltage platform. Manganese, which has high voltage characteristic, imparts a higher voltage platform to lithium manganese iron phosphate to have a higher energy density than lithium iron phosphate. Furthermore, lithium manganese iron phosphate maintains the characteristics of lithium iron phosphate, such as high safety, high cycle life, low cost, and environmental friendliness. Therefore, lithium manganese iron phosphate is one of the research hotspots of positive electrode materials of lithium batteries.

Although the lithium manganese iron phosphate material prepared by a conventional high-temperature solid-phase synthesis method can be used as the electrode material of the lithium battery, with the widespread application of lithium battery, the market has put forward higher requirements for the performance of the lithium battery, for example, further increasing the initial capacity of the lithium battery. Therefore, how to improve the electrochemical performance of the lithium manganese iron phosphate is of great significance.

SUMMARY

The present disclosure provides a lithium manganese iron phosphate material, a preparation method of the lithium iron manganese phosphate material, and a lithium battery therefrom, which can solve the above defects and improve electrochemical performance of the lithium manganese iron phosphate.

The present disclosure provides following technical solutions.

According to a first aspect, the present disclosure provides a lithium manganese iron phosphate material including a core and a coating layer on the core. A material of the core includes Li, Fe, Mn, Nb and $PO_4$ in a non-stoichiometric ratio, and a material of the coating layer includes any one or a combination of two of $LiNbO_3$ and $Li_3NbO_4$.

According to a second aspect, the present disclosure provides a method for preparing a lithium manganese iron phosphate material including the following steps:

dispersing a lithium source, a manganese source, an iron source, a phosphorus source, and a niobium source in a dispersion medium to form a first mixed system, and mixing the first mixed system with a complexing agent to form a gel; and
sintering the gel under an atmosphere of a first protective gas to obtain the lithium manganese iron phosphate material.

According to a third aspect, the present disclosure provides a lithium battery including battery cell units, each of the battery cell units includes a positive electrode sheet, a separator, and a negative electrode sheet, which are stacked in sequence. The positive electrode sheet includes a positive current collector and a positive active material layer disposed on one or more surfaces of the positive current collector, and the positive active material layer includes a lithium manganese iron phosphate material;

the lithium manganese iron phosphate material includes a core and a coating layer on the core, a material of the core includes Li, Fe, Mn, Nb and $PO_4$ in a non-stoichiometric ratio, and a material of the coating layer includes any one or a combination of two of $LiNbO_3$ and $Li_3NbO_4$; and/or, a method for preparing the lithium manganese iron phosphate material includes the following steps:
dispersing a lithium source, a manganese source, an iron source, a phosphorus source, and a niobium source in a dispersion medium to form a first mixed system, and mixing the first mixed system with a complexing agent to form a gel; and
sintering the gel in an atmosphere of a first protective gas to obtain the lithium manganese iron phosphate material.

Advantageous Effects

According to the embodiments of the present disclosure, the core of the lithium manganese iron phosphate material includes Nb-doped lithium manganese iron phosphate, and the Nb-doping is beneficial for stabilizing the lattice of the lithium manganese iron phosphate and promoting the ordering of the cation arrangement, thereby improving the stability of the lithium manganese iron phosphate material and improving the long cycle capacity retention rate of the lithium manganese iron phosphate material. Moreover, the material of the coating layer includes any one or a combination of two of $LiNbO_3$ and $Li_3NbO_4$, which has a protective effect on the core, can alleviate or avoid the problem of Fe and Mn dissolution caused by the infiltration of the core by the electrolyte, and ensure that the lithium manganese iron phosphate material has good conductivity while effectively isolating from the electrolyte, based on the introduction of Li of high conductivity in the coating layer. The synergistic action of the core doped with Nb and the coating layer with any one or a combination of two of $LiNbO_3$ and $Li_3NbO_4$ can effectively enhance the rate, cycle and safety performance of the lithium manganese iron phosphate material.

The electrode sheet comprising the lithium manganese iron phosphate material according to the embodiments of the present disclosure has a higher compaction density than a positive electrode sheet comprising a conventional lithium manganese iron phosphate material.

The lithium battery comprising the positive active material layer made of the positive active material according to the embodiments of the present disclosure has a higher initial capacity and a higher cycle capacity retention rate than the lithium battery comprising the positive active material layer made of a conventional lithium manganese iron phosphate material.

## BRIEF DESCRIPTION OF THE DRAWINGS

FIG. 1 is a schematic flowchart of a method for preparing a lithium manganese iron phosphate material according to some embodiments of the present disclosure.

FIG. 2 is a schematic view of a lithium battery according to some embodiments of the present disclosure.

FIG. 3 is a schematic view of a battery cell unit in a lithium battery according to some embodiments of the present disclosure.

FIG. 4 is a schematic view of a positive electrode sheet according to some embodiments of the present disclosure.

FIG. 5 shows X-ray diffraction analysis patterns of lithium manganese iron phosphate materials in Example 1 and Comparative Example 3 in the present disclosure.

FIG. 6 is an enlarged view of a portion of FIG. 5.

FIG. 7 shows a scanning electron microscope picture of a lithium manganese iron phosphate material in Example 1 of the present disclosure.

FIG. 8 is a cyclic graph of a first pouch lithium battery and a sixteenth pouch lithium battery at 45°C and 1C/1C cycle tests.

## DETAILED DESCRIPTION OF THE EMBODIMENTS

Unless defined otherwise, all professional and scientific terms used herein have the same meaning as those familiar to a person skilled in the art. Materials or reagents used in the examples and comparative examples of the present disclosure are commercially available. In addition, any methods and materials similar or equivalent to those described herein can be applied to the present disclosure. The preferred examples and materials described herein are exemplary only, but are not intended to limit the present disclosure.

It is to be noted that the order in which the following embodiments are described is not intended to show that it is the preferred order of the embodiments. Various embodiments of the present disclosure may be presented in a range format. It is to be understood that the description in range format is merely for convenience and brevity and should not be construed as an inflexible limitation on the scope of the disclosure. Accordingly, the description of a range should be considered to have specifically disclosed all the possible subranges as well as individual numerical values within the range. For example, description of a range such as from 1 to 6 should be considered to have specifically disclosed subranges such as from 1 to 3, from 1 to 4, from 1 to 5, from 2 to 4, from 2 to 6, from 3 to 6 or the like, as well as individual numbers within that range, for example, 1, 2, 3, 4, 5, and 6. This applies regardless of the range. Whenever a numerical range is indicated herein, it is meant to include any cited numeral (fractional or integral numbers) within the indicated range.

In the description herein, the terms "comprises", "comprising", "includes", "including", "having" and their conjugates mean "including, but not limited to".

The terms including "a plurality of", "multiple" or the like refer to two or more, for example, two, three, four, five, six, and the like.

The term "and/or" involves in a selection that includes any one of two or more related listed items, as well as a combination of any and all of related listed items, which includes a combination of any two related listed items, more than two related listed items, or all related listed items. For example, "A and/or B" includes three parallel schemes, A, B, and A + B. In another example, "A, and/or, B, and/or, C, and/or, D" includes technical solutions of any one of A, B, C, and D (i.e., the technical solutions connecting by the logical term "OR"), and combinations of any and all of A, B, C, and D, including combinations of any two or any three of A, B, C, and D, and a combination of four of A, B, C, and D (i.e., the technical solutions connecting by the logical term "AND").

The term "solid content" refers to the proportion of the mass of a solid substance in the slurry to the total mass of the slurry.

Embodiments of the present disclosure provide a lithium manganese iron phosphate material, which includes a core and a coating layer on the core. A material of the core includes Li, Fe, Mn, Nb, and $PO_4$ in a non-stoichiometric ratio, and a material of the coating layer includes any one or a combination of two of $LiNbO_3$ and $Li_3NbO_4$.

According to the embodiments of the present disclosure, the material of the core of the lithium manganese iron phosphate material includes Nb-doped lithium manganese iron phosphate, and the Nb doping is beneficial for stabilizing the lattice of the lithium manganese iron phosphate and promoting the ordering degree of the cation arrangement, so as to improve the stability of the lithium manganese iron phosphate material and increase the long cycle capacity retention rate of the lithium manganese iron phosphate material. Moreover, the material of the coating layer includes any one or a combination of two of $LiNbO_3$ and $Li_3NbO_4$, which has a protective effect on the core, can alleviate or avoid the problem of Fe and Mn dissolution caused by the infiltration of the core by the electrolyte, and ensures that the lithium manganese iron phosphate material has good conductivity while effectively isolating from the electrolyte, based on the introduction of Li of high conductivity in the coating layer. The synergistic action of the core doped with Nb and the coating layer including any one or a combination of two of $LiNbO_3$ and $Li_3NbO_4$ can effectively enhance the rate, cycle and safety performance of the lithium manganese iron phosphate material.

In order to further improve the electrochemical performance of the lithium manganese iron phosphate material, according to some embodiments of the present disclosure, the material of the core is $Li_aFe_xMn_yNb_z(PO_4)_b$, in which a, x, y, z, and b represent molar amounts of Li, Fe, Mn, Nb, and $PO_4$ in the core, respectively, and $0.2<y\leq0.9$; $0<z<0.2$; $0.9<a/b<1.1$; and/or, $0.9< (x+y+z)/b<1.2$ and $0.9<a/(x+y+z) <1.1$.

In order to further improve the compaction and rate performance of the lithium manganese iron phosphate material, in some embodiments of the present disclosure, the lithium manganese iron phosphate material has a secondary spherical structure. A particle size D50 of the lithium manganese iron phosphate material is 5 $\mu$m to 9 $\mu$m, for example, 5 $\mu$m, 6 $\mu$m, 7 $\mu$m, 8 $\mu$m, 9 $\mu$m, or a value between any two of the foregoing values, and/or, when a difference between a particle size D90 and a particle size D10 of the lithium manganese iron phosphate material is X, a ratio of X to particle size D50 (i.e., X/D50) is 0.2 to 1.8, for example, 0.2, 0.3, 0.4, 0.6, 0.7, 0.8, 1.0, 1.2, 1.3, 1.4, 1.5, 1.6, 1.8, or a value between any two of the foregoing values. It is to be noted that the conventional lithium manganese iron phosphate material generally has a single crystal morphology, which has a relatively small particle size (for example, the particle size D50 is 2 $\mu$m to 3 $\mu$m) and a relatively low compaction density. The compaction density of a positive electrode sheet prepared from the conventional lithium manganese iron phosphate material is generally 1.9 $g/cm^3$ to 2.1 $g/cm^3$, and the compaction density of a positive electrode sheet prepared from the lithium manganese iron phosphate material of the present disclosure may be 2.35 $g/cm^3$ or more. The lithium manganese iron phosphate material in the present embodiments has a primary particle size of about 300 nm, leading to a shorter extraction path of lithium ions and better rate performance, than the conventional lithium manganese iron phosphate material with single crystal morphology.

In order to improve the coating uniformity of the coating layer and ensure that the lithium manganese iron phosphate material has good rate, cycle and safety performance, according to some embodiments of the present disclosure, the thickness of the coating layer is 10 nm to 30 nm, for example, 10 nm, 11 nm, 12 nm, 14 nm, 15 nm, 17 nm, 18 nm, 20 nm, 23 nm, 24 nm, 25 nm, 27 nm, 28 nm, 29 nm, 30 nm, or a value between any two of the foregoing values.

It is to be noted that the lithium manganese iron phosphate material is generally prepared by the high-temperature solid-phase synthesis method in the related art. The method mainly adopts mechanical means to mix and refine raw materials, which easily leads to a problem of uneven microscopic distribution of raw materials and difficult diffusion, and impurities are easy to be introduced in the mechanical refining process. In addition, the method has the disadvantages of long sintering time, excess reaction steps, high energy consumption, and large lithium loss, so it is difficult to control the stoichiometric ratio of the products, and it is prone to form miscellaneous phases. Different batches of products have great differences in composition, structure, particle size distribution, and the like, generating poor production repeatability and consistency. Therefore, the lithium manganese iron phosphate material prepared by the high-temperature solid-phase synthesis method has a problem of unstable electrochemical performance.

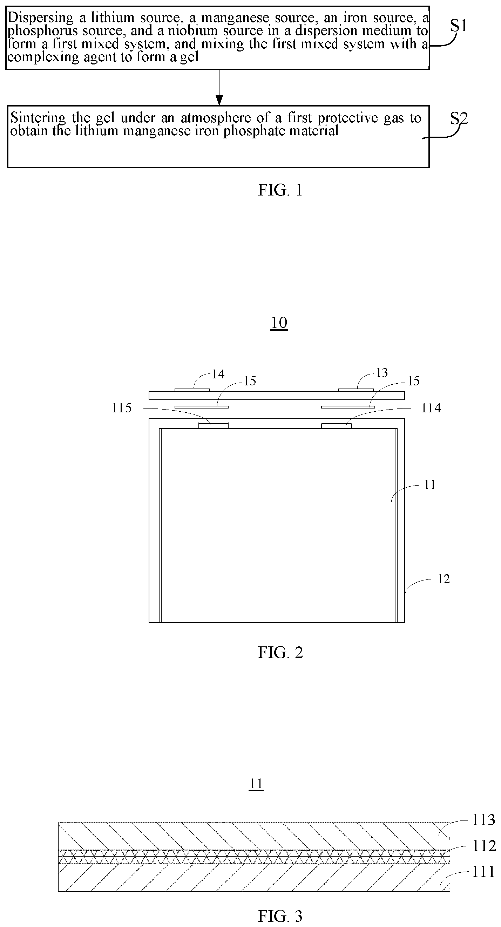

Based on the above, some embodiments of the present disclosure provide a method for preparing a lithium manganese iron phosphate material, which can be used for preparing the lithium manganese iron phosphate material according to any one of the foregoing embodiments, as shown in FIG. 1, including the following steps:

S1. dispersing a lithium source, a manganese source, an iron source, a phosphorus source, and a niobium source in a dispersion medium to form a first mixed system, and mixing the first mixed system with a complexing agent to form a gel; and

S2. sintering the gel under an atmosphere of a first protective gas to obtain a lithium manganese iron phosphate material.

In the method for preparing the lithium manganese iron phosphate material according to the embodiments of the present disclosure, all raw materials are mixed to form a sol by a sol-gel method, and the sol is aged and slowly polymerized among colloidal particles to form the gel with a three-dimensional space network structure. Then, the gel is sintered to obtain the lithium manganese iron phosphate material. The sol-gel technology has the advantages of low requirements for the equipment and easy control of reaction process conditions. Compared with the conventional high-temperature solid-phase synthesis method, the method for preparing the lithium manganese iron phosphate material according to the embodiments of the present disclosure has a lower sintering temperature, and the prepared lithium manganese iron phosphate material has higher uniformity and chemical purity, which improves the electrochemical performance and stability of the lithium manganese iron phosphate material.

Specifically, in step S1, the dispersion medium includes water, preferably deionized water. It is to be understood that the dispersion medium may also comprise one or more additives to facilitate dispersion of the raw materials. The adjuvants may be, for example, acids, bases or surfactants, which can be selected according to conventional methods in the art. Each of the raw materials may be water-soluble.

The lithium source may be one or more of a lithium oxide, a lithium hydroxide, and a lithium salt. The lithium oxide includes, but is not limited to, $Li_2O$. Anions generated by ionization of the lithium salt include, but are not limited to, one or more of an oxalate ion, a carbonate ion, a sulfate ion, a nitrate ion, an acetate ion, a halogen ion, a phosphate ion, and a dihydrogen phosphate ion. Examples of the lithium salt include, but are not limited to, one or more of lithium carbonate, lithium sulfate, lithium nitrate, lithium acetate, lithium dihydrogen phosphate, lithium phosphate, and lithium oxalate.

The manganese source may be a divalent manganese compound, for example, one or more of a manganese oxide, a manganese hydroxide, and a manganese salt. The manganese oxide includes, but is not limited to, one or more of manganese monoxide and manganese tetroxide. Anions generated by ionization of the manganese salt include, but are not limited to, one or more of an oxalate ion, a carbonate ion, a sulfate ion, a nitrate ion, an acetate ion, a halogen ion, and a phosphate ion. Examples of the manganese source are one or more of manganese carbonate, manganese phosphate, manganese oxalate, manganese nitrate, manganese acetate, manganese sulfate, and manganese chloride.

The iron source may be a divalent iron compound, for example, one or more of an iron oxide, a ferrous hydroxide, and an iron salt. The iron oxide includes, but is not limited to, one or more of ferriferrous oxide and ferrous oxide. Anions generated by ionization of the iron salt include, but are not limited to, one or more of an oxalate ion, a carbonate ion, a sulfate ion, a nitrate ion, an acetate ion, a halogen ion, and a phosphate ion. Examples of the iron salt may be, for example, one or more of ferrous sulfate, ferrous chloride, ferrous phosphate, ferrous pyrophosphate, ferrous nitrate, ferrous acetate, ferrous oxalate, and ferrous chloride.

The phosphorus source may be one or more of phosphoric acid and a phosphorus-containing metal salt. The phosphorus-containing metal salt includes, but is not limited to, one or more of ammonium phosphate, ammonium dihydrogen phosphate, potassium dihydrogen phosphate, sodium dihydrogen phosphate, and iron phosphate.

The niobium source may be a niobium oxide ($Nb_xO_y$), which includes, but is not limited to, one or more of NbO, $NbO_2$, $Nb_2O_3$, and $Nb_2O_5$.

In some embodiments of the present disclosure, the complexing agent is selected from one or more of polyacrylic acid, citric acid, polyacrylamide, hydrolyzed polymaleic anhydride, polyhydroxy acrylic acid, ethylenediaminetetraacetic acid, disodium ethylenediaminetetraacetic acid, tetrasodium ethylenediaminetetraacetic acid, sodium gluconate, and sodium alginate.

In order to further improve the electrochemical properties of the lithium manganese iron phosphate material, in some embodiments of the present disclosure, a ratio of Li: Mn: Fe: P: Nb in a first mixed system is a: x: y: z: b, in which $0.2<y \leq 0.9$, $0<z<0.2$, $0.9<a/b<1.1$; and/or, $0.9< (x+y+z)/b<1.2$, $0.9<a/(x+y+z) <1.1$.

In some embodiments of the present disclosure, in the step of mixing the first mixed system with the complexing agent to form the gel, a molar ratio of metal cations in the first mixed system to the complexing agent is 1: (3 to 5), for example, 1: 3, 1: 4, 1: 5, or a value between any two of the foregoing ratios. If the addition amount of the complexing agent is lower than the range, for example, the molar ratio of the metal cations in the first mixed system to the complexing agent is greater than 1: 3, the obtained gel is of poor quality. If the addition amount of the complexing agent is higher than the range, for example, the molar ratio of the metal cations in the first mixed system to the complexing agent is less than 1: 5, the excess complexing agent may not only lead to the waste of the complexing agent, which increases the production cost, but also adversely affect the electrochemical performance of the lithium manganese iron phosphate material.

In order to further improve the chemical purity of the obtained lithium manganese iron phosphate material, in some embodiments of the present disclosure, the step of mixing the first mixed system with the complexing agent to form the gel includes mixing the first mixed system with the complexing agent to obtain a second mixed system, and then stirring the second mixed system at 60°C to 90°C under an atmosphere of a second protective gas to form the gel. The second protective gas is selected from one or more of nitrogen gas, argon gas, helium gas, argon gas, neon gas, krypton gas, and xenon gas.

In step S2, the purpose of the sintering treatment is to generate the lithium manganese iron phosphate material by solid phase reaction of the raw materials. To further improve the chemical purity of the obtained lithium manganese iron phosphate material, in some embodiments of the present disclosure, the first protective gas is selected from one or more of nitrogen gas, argon gas, helium gas, argon gas, neon gas, krypton gas, and xenon gas. The sintering treatment may be carried out in a muffle furnace, a tubular furnace, a rotary furnace, a roller kiln or a pusher kiln.

In some embodiments of the present disclosure, the sintering treatment may be carried out at a temperature of 600°C to 800°C, for example, 600°C, 620°C, 630°C, 650°C, 660°C, 670°C, 680°C, 700°C, 710°C, 720°C, 740°C, 750°C, 760°C, 770°C, 790°C, 800°C, or a value between any two of the foregoing values. The sintering treatment may be carried out for 8 h to 12 h, for example, 8 h, 9 h, 10 h, 11 h, 12 h, or a value between any two of the foregoing values.

In order to improve the coating integrity and uniformity of the coating layer to the core, and to improve the uniformity of Nb doped in the core, so as to further improve the electrochemical performance of the obtained lithium manganese iron phosphate material, in some embodiments of the present disclosure, the step of sintering the gel includes subjecting the gel to a first sintering sub-treatment at a first temperature of 300°C to 500°C for 3 h to 5 h, to obtain a pre-sintered material; and subjecting the pre-sintered material to a second sintering sub-treatment at a second temperature of 600°C to 800°C for 8 h to 12 h. Since a Nb-containing compound without Li is easily reacted with a Li-containing compound (for example, lithium carbonate) to form $LiNbO_3$ at 300°C to 500°C, in step of sintering the gel, the gel is first pre-sintered at a low temperature (the first sintering sub-treatment) to provide grains growing slowly and uniformly at a mild environment, so that a uniform and relatively dense coating layer with a main component of $LiNbO_3$ is formed on the core before the second sintering sub-treatment, which thereby effectively prevents from incomplete coating, low coating uniformity, and poor coating stability of the coating layer formed by one-step high-temperature sintering. In the subsequent second sintering sub-treatment, since the second sintering sub-treatment is carried out at a high temperature, at least part of the $LiNbO_3$ is converted to $LiNbO_4$. Moreover, because a radius of Nb ion (0.69Å) is less than that of Mn ion or Fe ion, a part of Nb ions may diffuse to the bulk phase of the core material, replace other metal ions (Mn ions or Fe ions) and occupy their positions to form a Nb-doped bulk phase, which is favorable for stabilizing the crystal lattice, improving the stability of the prepared lithium manganese iron phosphate material, and effectively avoiding the problem of poor Nb doping uniformity existing in the one-step high-temperature sintering treatment.

In order to further improve the Nb doping uniformity in the core and in the coating layer, in some embodiments of the present disclosure, the pre-sintered material is subjected to a pulverization process followed by a second sintering sub-treatment.

In order to obtain the lithium manganese iron phosphate material having specific particle sizes, in some embodiments of the present disclosure, after the step of the sintering treatment and before the step of obtaining the lithium manganese iron phosphate material, the method for preparing the lithium manganese iron phosphate material further includes pulverizing the sintered material obtained after the sintering treatment, and then screening the pulverized material through a sieve of 150 mesh to 200 mesh to obtain the lithium manganese iron phosphate material.

Embodiments of the present disclosure further provide an electrode sheet, which includes the lithium manganese iron phosphate material as described in any one of the foregoing embodiments, or the lithium manganese iron phosphate material prepared by the preparation method as described in any one of the foregoing embodiments. The electrode sheet according to the embodiments of the present disclosure has a higher compaction density than a positive electrode sheet including a conventional lithium manganese iron phosphate material.

Embodiments of the present disclosure further provide a lithium battery, which includes, but is not limited to, a button battery, a pouch battery, a prismatic lithium battery, and a cylindrical lithium battery. The lithium battery includes a positive electrode sheet. The positive electrode sheet includes a positive electrode sheet current collector and a positive active material layer disposed on a surface of the positive current collector. The positive active material layer includes the lithium manganese iron phosphate material as described in any one of the foregoing embodiments, or the lithium manganese iron phosphate material prepared by the preparation method as described in any one of the foregoing embodiments. The lithium battery according to the embodiments of the present disclosure has a higher initial capacity and a higher long-cycle capacity retention rate, than a lithium battery prepared with a positive active material layer that is comprised of a conventional lithium manganese iron phosphate material.

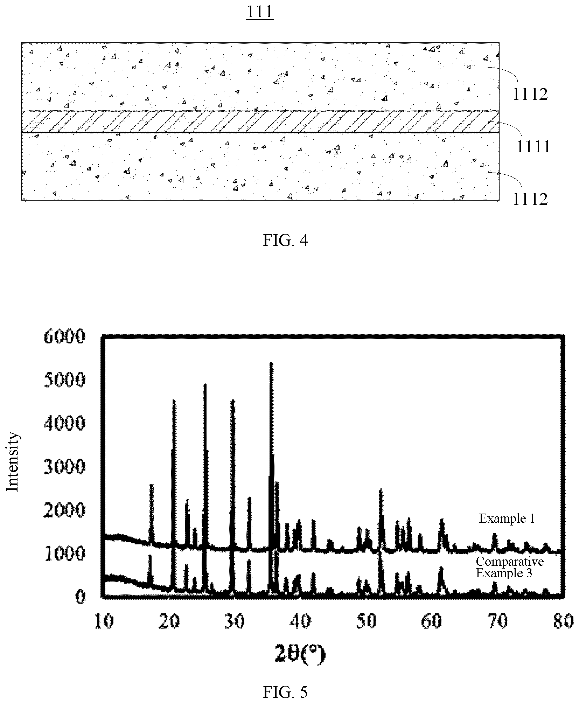

Taking the lithium battery as a square lithium battery as an example, as shown in FIGs. 2 and 3, the lithium battery 1 includes one or more battery cell units 11. Each of the battery cell units 11 includes a positive electrode sheet 111, a separator 112, and a negative electrode sheet 113 stacked in sequence. As shown in FIG. 4, the positive electrode sheet 111 includes a positive current collector 1111 and positive active material layers 1112 disposed on one or more surfaces of the positive current collector 1111. The positive active material layer 1112 includes the lithium manganese iron phosphate material as described in any one of the foregoing embodiments, or the lithium manganese iron phosphate material as prepared by the preparation method as described in any one of the foregoing embodiments.

The positive active material layer further comprises a positive electrode adhesive and a positive electrode conductive agent. The positive current collector, the positive electrode adhesive, and the positive electrode conductive agent may each made from conventional materials in the art. For example, the material of the positive current collector includes, but is not limited to, aluminum foils or composite aluminum foils. The positive electrode adhesive includes, but is not limited to, one or more of vinylidene fluoride/hexafluoropropylene copolymers, polyvinylidene fluoride, polyacrylonitrile, polymethyl methacrylate, and polytetrafluoroethylene. The positive electrode conductive agent includes, but is not limited to, one or more of carbon black, graphite, and graphene.

A method for preparing the positive electrode sheet, for example, includes the steps of mixing the lithium manganese iron phosphate material, the positive electrode conductive agent, the positive electrode adhesive, and a first solvent to obtain a first mixture; coating the first mixture on the positive current collector; and then performing sequentially drying and rolling to obtain the positive electrode sheet. It is to be noted that the first mixture may be cast on a separate carrier to form a film layer, and then the film layer is separated from the carrier and stacked to the surface(s) of the positive current collector. The first solvent includes, but is not limited to, N-methylpyrrolidone, dimethylformamide, or ethylene glycol dimethyl ether.

The negative electrode sheet includes a negative current collector and a negative active material layer disposed on a surface of the negative current collector. The negative active material layer includes a negative active material, a negative electrode adhesive, and a negative electrode conductive agent. The negative current collector, the negative active material, the negative electrode adhesive, and the negative electrode conductive agent may each be made from materials in the art. For example, the material of the negative current collector includes, but is not limited to, a copper foil, a composite copper foil, or a copper mesh. The negative active material includes, but is not limited to, one or more of a lithium elementary substance, a lithium-alloyed metal, a semi-metal, a transition metal oxide, a non-transition metal oxide, and a carbon material. The lithium-alloyed metal or the semi-metal includes, but is not limited to, Si, Sn, Al, Ge, Pb, Bi, Sb, a Si-$Y_1$ alloy ($Y_1$ is an alkali metal, an alkaline earth metal, an element of Group 13 to 16, a transition metal, a rare earth element, or a combination thereof, except Si), and a Sn-$Y_2$ alloy ($Y_2$ is an alkali metal, an alkaline earth metal, an element of Groups 13 to 16, a transition metal, a rare earth element, or a combination thereof, except Sn). The transition metal oxide includes, but is not limited to, one or more of a lithium titanium oxide, a vanadium oxide, a lithium vanadium oxide, and a titanium niobium oxide. The non-transition metal oxide includes, but is not limited to, one or more of $SnO_2$ and SiOx (0<x<2). The carbon material includes, but is not limited to, one or more of crystalline carbon (e.g., graphite) and amorphous carbon. The negative electrode adhesive is deionized water or may be the same as the positive electrode adhesive. The negative electrode conductive agent may be the same as the positive electrode conductive agent. The preparation method of the negative electrode sheet can be carried out by referring to the preparation method of the positive electrode sheet.

A material of the separator includes, but is not limited to, one or more of glass fibers, polyesters, Teflon, polyethylene, polypropylene, and polytetrafluoroethylene.

It is to be noted that the lithium battery according to the embodiments of the present disclosure may also include other conventional structural components. For example, the lithium battery according to the embodiments of the present disclosure further includes an electrolyte in which the battery cell is immersed. The electrolyte includes a lithium salt and an organic solvent. The organic solvent includes, but is not limited to, a combination of two or more of ethylene carbonate, propylene carbonate, dimethyl carbonate, diethyl carbonate, ethyl methyl carbonate, propylene sulfite, ethyl acetate, diethyl sulfite, and 1,3-propanesultone. The lithium salt includes, but is not limited to, one or more of $LiPF_6$, $LiClO_4$, $LiBF_4$, $LiSbF_6$, $LiAsF_6$, $LiCF_3SO_3$, $Li(CF_3SO_2)_2N$, $LiC_4F_9SO_3$, $LiAlO_2$, $LiAlCl_4$, LiODFB , LiTFSI, LiFSI, LiCl, LiI and $LiN(C_xF_{2x+1}SO_2)(C_yF_{2y+1}SO_2)$, wherein x and y are independently integers from 1 to 20. The mass of the lithium salt is, for example, 10% to 15% of the total mass of the electrolyte. As another example, with continued reference to FIG. 2, the lithium battery 1 further includes a housing 12, a positive post 13, and a negative post 14. The housing 12 is made of, for example, aluminum. The battery cell units 11 are disposed within the housing 12. A positive tab 114 of the battery cell unit 11 and the positive post 13 are integrally welded by a connecting piece 15 to form the positive electrode of the lithium battery 10. A negative tab 115 of the battery cell unit 11 and the negative post 14 are integrally welded by the connecting piece 15 to form the negative electrode of the lithium battery 10.

The technical solutions and the technical effect of the present disclosure will be described in detail below by means of examples. The following examples are merely a part of the embodiments of the present disclosure and are not intended to specifically limit the present disclosure.

Example 1

The example provides a lithium manganese iron phosphate material and a preparation method thereof. The lithium manganese iron phosphate material includes a core and a coating layer on the core. A material of the core is $LiFe_{0.40}Mn_{0.55}Nb_{0.05}PO_4$. A material of the coating layer includes $LiNbO_3$ and $Li_3NbO_4$, and a thickness of the coating layer is 15 nm. The particle size D50 of the lithium manganese iron phosphate material is 8 $\mu$m. A difference between the particle size D90 and the particle size D10 of the lithium manganese iron phosphate material is X. The ratio X/D50 of X to particle size D50 is 1.15.

The method for preparing the lithium manganese iron phosphate material includes the following steps.

S1.1. 47.58 kg of manganese acetate, 28.77 kg of ferrous oxalate, 18.47 kg of lithium carbonate, 57.52 kg of ammonium dihydrogen phosphate, and 2.93 kg of $Nb_2O_3$ were added to a mixer to obtain a mixed material, then deionized water was added to the mixed material, in a mass ratio of the mixed material to deionized water of 1: 1.5. The resulting mixed solution was stirred at a rotation speed of 600 r/min until it was uniformly mixed to obtain a first mixed system.

S1.2. A complexing agent was added to the first mixed system in a molar ratio of metal cations in the first mixed system to the complexing agent of 1: 3 at room temperature to obtain a second mixed system, wherein the complexing agent was citric acid and polyacrylic acid (the mass ratio of citric acid to polyacrylic acid was 1: 1). Then, the second mixed system is continuously stirred at 85°C under a protective atmosphere of nitrogen gas until a gel was formed.

S1.3. The gel obtained in step S1.3 was transferred into a kiln, and a protective gas $N_2$ was introduced therein at a flow rate of 80 mL/min. Then, the gel was heated from room temperature to 400°C at a heating rate of 5°C/min, and sintered at 400°C for 4 h to obtain a pre-sintered material.

S1.4. The pre-sintered material was mechanically pulverized and transferred to a kiln, and a protective gas $N_2$ was introduced therein at a flow rate of 80 mL/min. Then, the mechanically pulverized material was heated to 750°C at a heating rate of 5°C/min, and sintered at 750°C for 10 h to obtain a sintered material.

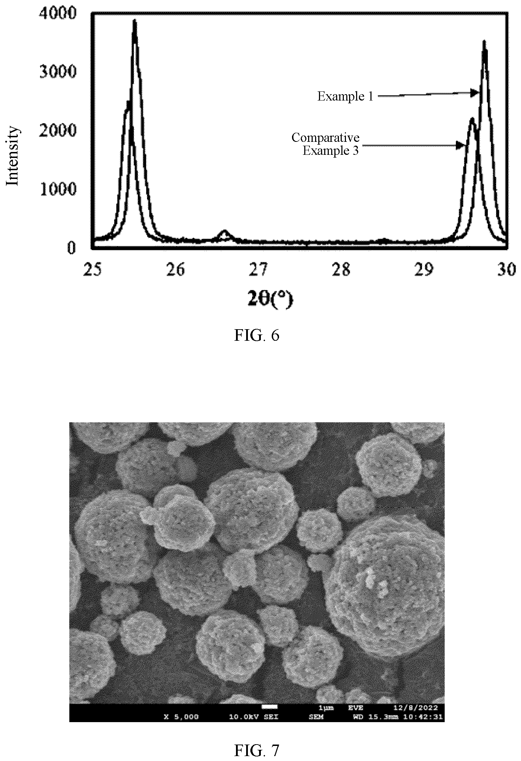

S1.5. The sintered material was sequentially subjected to an airflow pulverizing treatment and a screening treatment using a 150 mesh sieve. Iron elementary substance was removed from the material that passed through the 150 mesh sieve. The iron elementary substance-removed material was subjected to an X-ray diffraction (XRD) analysis, and XRD analysis patterns were shown in FIGs. 5 and 6, indicating that the resultant was the lithium manganese iron phosphate material after the iron elementary substance was removed.

The lithium manganese iron phosphate material obtained in step S1.5 was observed by a scanning electron microscope (SEM). As shown in FIG. 7, the lithium manganese iron phosphate material has a good secondary spherical structure.

Example 2

This example provides a lithium manganese iron phosphate material and a preparation method. The lithium manganese iron phosphate material in the present example is the same as that in Example 1, except that the material of the core was $LiFe_{0.40}Mn_{0.55}Nb_{0.05}(PO_4)_{0.92}$.

The method for preparing the lithium manganese iron phosphate material in the present example is the same as that in Example 1, except that 57.52 kg of ammonium dihydrogen phosphate in step S1.1 was replaced with 52.91 kg of ammonium dihydrogen phosphate.

Example 3

This example provides a lithium manganese iron phosphate material and a preparation method thereof. The lithium manganese iron phosphate material in the present example is the same as that in Example 1, except that the material of the core was $LiFe_{0.40}Mn_{0.55}Nb_{0.05}(PO_4)_{1.02}$.

The method for preparing the lithium manganese iron phosphate material in the present example is the same as that in Example 1, except that that 57.52 kg of ammonium dihydrogen phosphate in step S1.1 was replaced with 58.67 kg of ammonium dihydrogen phosphate.

Example 4

This example provides a lithium manganese iron phosphate material and a preparation method thereof. The lithium manganese iron phosphate material in the present example is the same as that in Example 1, except that the material of the core was $LiFe_{0.40}Mn_{0.55}Nb_{0.05}(PO_4)_{1.1}$.

The method for preparing the lithium manganese iron phosphate material in the present example is the same as that in Example 1, except that 57.52 kg of ammonium dihydrogen phosphate in step S1.1 was replaced with 63.27 kg of ammonium dihydrogen phosphate.

Example 5

This example provides a lithium manganese iron phosphate material and a preparation method thereof. The lithium manganese iron phosphate material in the present example is the same as that in Example 1, except that the material of the core was $LiFe_{0.40}Mn_{0.55}Nb_{0.05}(PO_4)_{0.95}$.

The method for preparing the lithium manganese iron phosphate material in the present example is the same as that in Example 1, except that 57.52 kg of ammonium dihydrogen phosphate in step S1.1 was replaced with 54.64 kg of ammonium dihydrogen phosphate.

Example 6

This example provides a lithium manganese iron phosphate material and a preparation method thereof. The lithium manganese iron phosphate material in the present example is the same as that in Example 1, except that the material of the core was $Li_{0.91}Fe_{0.40}Mn_{0.55}Nb_{0.05}PO_4$.

The method for preparing the lithium manganese iron phosphate material in the present example is the same as that in Example 1, except that 18.47 kg of lithium carbonate in step S1.1 was replaced with 16.81 kg of lithium carbonate.

Example 7

This example provides a lithium manganese iron phosphate material and a preparation method thereof. The lithium manganese iron phosphate material in the present example is the same as that in Example 1, except that the material of the core was $Li_{0.95}Fe_{0.40}Mn_{0.55}Nb_{0.05}PO_4$.

The method for preparing the lithium manganese iron phosphate material in the present example is the same as that in Example 1, except that 18.47 kg of lithium carbonate in step S1.1 was replaced with 17.55 kg of lithium carbonate.

Example 8

This example provides a lithium manganese iron phosphate material and a preparation method thereof. The lithium manganese iron phosphate material in the present example is the same as that in Example 1, except that the material of the core was $Li_{1.05}Fe_{0.40}Mn_{0.55}Nb_{0.05}PO_4$.

The method for preparing the lithium manganese iron phosphate material in the present example is the same as that in Example 1, except that 18.47 kg of lithium carbonate in step S1.1 was replaced with 19.39 kg of lithium carbonate.

Example 9

This example provides a lithium manganese iron phosphate material and a preparation method thereof. The lithium manganese iron phosphate material in the present example is the same as that in Example 1, except that the material of the core was $Li_{1.09}Fe_{0.40}Mn_{0.55}Nb_{0.05}PO_4$.

The method for preparing the lithium manganese iron phosphate material in the present example is the same as that in Example 1, except that 18.47 kg of lithium carbonate in step S1.1 was replaced with 20.13 kg of lithium carbonate.

Example 10

This example provides a lithium manganese iron phosphate material and a preparation method thereof. The lithium manganese iron phosphate material in the present example is the same as that in Example 1, except that the material of the core was $LiFe_{0.40}Mn_{0.55}Nb_{0.001}PO_4$.

The method for preparing the lithium manganese iron phosphate material in the present example is the same as that in Example 1, except that 2.93 kg of $Nb_2O_3$ in step S1.1 was replaced with 0.58 kg of $Nb_2O_3$.

Example 11

This example provides a lithium manganese iron phosphate material and a preparation method thereof. The lithium manganese iron phosphate material in the present example is the same as that in Example 1, except that the material of the core was $LiFe_{0.40}Mn_{0.55}Nb_{0.15}PO_4$.

The method for preparing the lithium manganese iron phosphate material in the present example is the same as that in Example 1, except that 2.93 kg of $Nb_2O_3$ in step S1.1 was replaced with 8.77 kg of $Nb_2O_3$.

Example 12

This example provides a lithium manganese iron phosphate material and a preparation method thereof. The method for preparing the lithium manganese iron phosphate material in the present example is the same as that in Example 1, except that the step S1.4 in Example 1 was replaced with a step in which the gel obtained in step S1.3 was transferred to a kiln, and a protective gas $N_2$ was introduced therein at a flow rate of 80 mL/min, and then the gel was heated

EP 4 559 872 A1

from room temperature to 750°C at a heating rate of 5°C/min, and sintered at 750°C for 10 h to obtain a sintered material, and the step S1.5 in Example 1 was omitted.

Example 13

This example provides a lithium manganese iron phosphate material and a preparation method thereof. The method for preparing the lithium manganese iron phosphate material in the present example is the same as that in Example 1, except that the complexing agent being citric acid and polyacrylic acid (the mass ratio of citric acid to polyacrylic acid was 1: 1) in step S1.3 was replaced with the complexing agent being citric acid.

Comparative Example 1

This comparative example provides a lithium manganese iron phosphate material and a preparation method thereof. The lithium manganese iron phosphate material was $LiFe_{0.4}Mn_{0.6}PO_4$ having a single crystal morphology and a particle size D50 of 2 $\mu$m.
The method for preparing the lithium manganese iron phosphate material in the present comparative example includes the following steps:

S10.1. 51.91 kg of manganese acetate, 28.77 kg of ferrous oxalate, 18.47 kg of lithium carbonate, and 57.52 kg of ammonium dihydrogen phosphate were added to a mixer to obtain a mixed material, then deionized water was added to the mixed material in a mass ratio of the mixed material to deionized water of 1: 1.5. and uniformly mixed to obtain a first slurry.
S10.2. The first slurry was subjected to sanding at a sanding rotation speed of 400 r/min for 2 h to obtain a second slurry.
S10.3. The second slurry was subjected to spray drying, while ensuring that the second slurry was in stirring throughout the spray drying process, to obtain a precursor material having a particle size distribution D50 in a range of 1 $\mu$m to 5 $\mu$m.
S10.4. The precursor material was placed in a kiln, a protective gas $N_2$ was introduced at a flow rate of 80 mL/min. Then, the gel was heated from room temperature to 750°C at a heating rate of 5°C/min, sintered at 750°C for 10 h, and cooled to room temperature to obtain a sintered material;
S10.5. The sintered material was sequentially subjected to an airflow pulverizing treatment and a screening treatment using a 150 mesh sieve, Iron elementary substance was removed from the material that passed through the 150 mesh sieve to obtain the lithium manganese iron phosphate material.

Comparative Example 2

This comparative example provides a lithium manganese iron phosphate material and a preparation method thereof. The method for preparing the lithium manganese iron phosphate material in the present comparative example is the same as that in Example 1, except that the step S10.1 in Example 1 was replaced with a step in which 51.91 kg of manganese acetate, 28.77 kg of ferrous oxalate, 18.47 kg of lithium carbonate, 57.52 kg of ammonium dihydrogen phosphate and 2.93 kg of $Nb_2O_3$ were added to a mixer to obtain a mixed material, and then deionized water was added to the mixed material in a mass ratio of the mixed material to deionized water of 1: 1.5 to obtain a first slurry.

Comparative Example 3

This comparative example provides a lithium manganese iron phosphate material and a preparation method thereof. The method for preparing the lithium manganese iron phosphate material in the present comparative example is the same as that in Example 1, except that the step S10.1 in Example 1 was replaced with a step in which 51.91 kg of manganese acetate, 28.77 kg of ferrous oxalate, 18.47 kg of lithium carbonate and 57.52 kg of ammonium dihydrogen phosphate were added to a mixer to obtain a mixed material, then deionized water was added to the mixed material in a mass ratio of the mixed material to deionized water of 1: 1.5, and stirred at 600 r/min until the mixed material was completely dissolved to obtain a first mixed system.
The iron elementary substance-removed material was subjected to X-ray diffraction (XRD), and XRD analysis patterns were shown in FIGs. 5 and 6. It is to be noted that, as can be seen from FIGs. 5 and 6, the peak position of the lithium manganese iron phosphate material obtained in Example 1 is shifted to a large angle, compared to the lithium manganese iron phosphate material obtained in Comparative Example 3, indicating that a part of the Nb ions are incorporated into the bulk phase structure of the lithium manganese iron phosphate because the radius of Nb ion (0.64 Å) is less than that of the Mn ion and the Fe ion. According to the Bragg equation, $2d\sin\theta=n\lambda$, the less the ion radius (meaning that d decreases), the larger the θ angle, resulting in that the peak position is shifted to a large angle.

Experimental example

The lithium manganese iron phosphate materials obtained in Examples 1 to 13 and Comparative Examples 1 to 3 were used to prepare pouch lithium batteries, and obtain a first pouch lithium battery to a sixteenth pouch lithium battery. The positive electrode sheet of the pouch lithium battery includes a positive current collector and a positive electrode active layer disposed on a surface of the positive current collector. The positive electrode active layer includes a lithium manganese iron phosphate material prepared in various Examples or Comparative Examples. The material of the positive current collector is a carbon-coated aluminum foil. The negative electrode sheet of the pouch lithium battery includes a negative current collector and a negative electrode active layer disposed on a surface of the negative current collector. The the negative current collector is a copper foil. The negative electrode active layer includes graphite. The difference among the first pouch lithium battery to the sixteenth pouch lithium battery is solely in that the positive electrode sheets of these pouch lithium batteries have different lithium manganese iron phosphate materials. The lithium manganese iron phosphate material in the first pouch lithium battery is the lithium manganese iron phosphate material obtained in Example 1, the lithium manganese iron phosphate material in the second pouch lithium battery is the lithium manganese iron phosphate material obtained in Example 2, and the lithium manganese iron phosphate material in the third pouch lithium battery is the lithium manganese iron phosphate material obtained in Example 3. In this order, the lithium manganese iron phosphate material in the sixteenth pouch lithium battery is the lithium manganese iron phosphate material obtained in Comparative Example 3.

The method for preparing the positive electrode sheet includes the following steps:

Lithium manganese iron phosphate material, conductive carbon black (Super PLL), carbon nanotube, polyvinylidene fluoride in a mass ratio of 97: 0.4: 0.5: 2.1 were weighted, and mixed with N-methylpyrrolidone uniformly to obtain a positive electrode slurry with a solid content of 65%. Then, the positive electrode slurry was coated on a carbon-coated aluminum foil having a thickness of 12 $\mu$m (on two sides) by a coating machine, then baked and cured under 120°C to form a positive active material layer. Then, the positive active material layer was cold pressed by a roller press to obtain the positive electrode sheet having a thickness of 160 $\mu$m.

The method for preparing the negative electrode sheet includes the following steps. Graphite, conductive carbon black (Super PLL), carboxymethyl cellulose, and styrene butadiene rubber in a mass ratio of 97: 0.7: 1.25: 1.05 were weighted, and mixed with N-methylpyrrolidone uniformly to obtain a negative electrode slurry with a solid content of 55%. The negative electrode slurry was coated on a carbon-coated aluminum foil having a thickness of 8 $\mu$m (on two sides) by a coating machine, and then baked and cured under 80°C to form a negative active material layer. Then, the negative active material layer was cold pressed by a roller press to obtain the negative electrode sheet having a thickness of 120 $\mu$m.

The method for preparing the electrolyte includes the following steps. Ethylene carbonate (EC), diethyl carbonate (DEC), and ethyl methyl carbonate (EMC) in a volume ratio of 4: 3: 3 were mixed to obtain a solvent. $LiPF_6$ and an additive were added to the solvent, and uniformly mixing to obtain an electrolyte, in which the concentration of $LiPF_6$ is 1.0 mol/L, and the mass of the additive is 10% of the total mass of the electrolyte. The additive is composed of vinylene carbonate, 1,3-propanesultone, fluoroethylene carbonate and cyclohexylbenzene in a mass ratio of 3: 2: 1: 1.

The positive electrode sheet, the negative electrode sheet, and a PP separator of 12 $\mu$m were laminated to obtain a bare battery core. The bare battery core was placed in an outer packaging aluminum-plastic film to assemble them into a 2 Ah pouch battery cell. The electrolyte was injected therein. After a series of processes, such as aging, forming, shaping, and packaging, the pouch lithium battery was obtained.

First, the compaction densities of the positive electrode sheets made of the lithium manganese iron phosphate materials in Examples 1 to 13 and Comparative Examples 1 to 3 were detected independently. Three parallel samples were provided for each positive electrode sheet, and an average value of the compaction densities from the three detection parallel samples was taken as the compaction density value of each positive electrode sheet.

The method for detecting the compaction density includes the following steps. The positive electrode sheet that was rolled was taken and cut to obtain a circular detection sample with an area of 2,500 mm², and a thickness (L1) and a weight (W1) of the circular detection sample were determined. Then, the positive active material layer of the positive electrode sheet was removed by washing with an acetone-ethanol solution to obtain a thickness (L2) and a weight (W2) of the carbon-coated aluminum foil. When the difference between W1 and W2 is set to dW, the difference between L1 and L2 is set to dL, and the area of the circular detection sample is set to S, the quotient obtained by dividing dW by S is the areal density, and the quotient obtained by dividing the areal density by dL is the compaction density.

The test results are shown in Table 1 below:

Table 1. Compaction densities of positive electrode sheets prepared using the lithium manganese iron phosphate materials of Examples 1 to 13 and Comparative Examples 1 to 3

| No.: | Compaction density (g/cm$^3$) |
|---|---|
| Example 1 | 2.38 |
| Example 2 | 2.41 |
| Example 3 | 2.37 |
| Example 4 | 2.36 |
| Example 5 | 2.40 |
| Example 6 | 2.37 |
| Example 7 | 2.39 |
| Example 8 | 2.39 |
| Example 9 | 2.40 |
| Example 10 | 2.36 |
| Example 11 | 2.38 |
| Example 12 | 2.37 |
| Example 13 | 2.39 |
| Comparative Example 1 | 2.15 |
| Comparative Example 2 | 2.13 |
| Comparative Example 3 | 2.36 |

As can be seen from Table 1, the positive electrode sheets prepared from the lithium manganese iron phosphate materials in Examples 1 to 13 have a higher compaction density than the positive electrode sheets prepared from the lithium manganese iron phosphate materials in Comparative Examples 1 to 3. For example, the compaction density of the positive electrode sheet prepared from the lithium manganese iron phosphate material in Example 2 is 12% higher than that of the positive electrode sheet prepared from the lithium manganese iron phosphate material in Comparative Example 1, the compaction density of the positive electrode sheet prepared from the lithium manganese iron phosphate material in Example 2 is 13% higher than that of the positive electrode sheet prepared from the lithium manganese iron phosphate material in Comparative Example 2, and the compaction density of the positive electrode sheet prepared from the lithium manganese iron phosphate material in Example 3 is 2.1% higher than that of the positive electrode sheet prepared from the lithium manganese iron phosphate material in Comparative Example 2.

This indicates that the lithium manganese iron phosphate material in the embodiments of the present disclosure has a secondary spherical structure, and the particle size thereof is larger than that of the conventional lithium manganese iron phosphate material with a single crystal morphology, thereby improving the compaction density of the positive electrode sheet. The reason is that, for powder materials with the same substance, a uniform particle size and a similar geometric shape, the larger the particle size, the smaller the contact area between particles, the smaller the interaction force between particles (for example, mechanical entanglement force and friction force), and the better the flowability, so that it is prone to form a compact packing state, leading to a larger filling density and a smaller porosity. Therefore, under the action of the same pressure, gaps between particles occupy a smaller space and it is easier to obtain a relatively large compaction density.

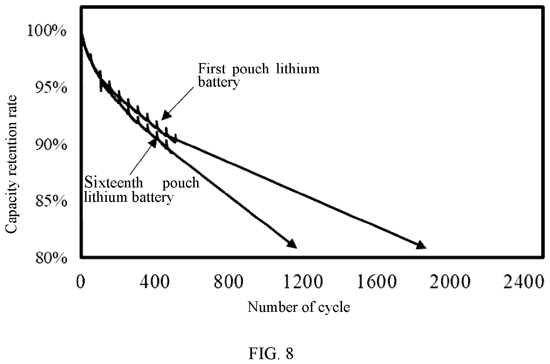

The electrical performance test was carried out on the first to sixteenth pouch lithium batteries. The test method includes the following steps. Each pouch lithium battery was charged to 4.2 V at 25°C at constant current and constant voltage at a rate of 0.2 C, in which the cut-off current for constant voltage charge was 0.02 C, and then was discharged at a rate of 0.2 C at constant current until the voltage reaches 2.5 V, obtaining the first discharge capacity and the first charge capacity at 25 °C and at a rate of 0.2 C. The first charge-discharge efficiency for each pouch lithium battery at 25 °C and at a rate of 0.2 C (the ratio of the first discharge capacity to the first charge capacity $\times$ 100%) was calculated, and results are shown in Table 2 below. In addition, the performances of the first to sixteenth pouch lithium batteries at 45°C and 1C/1C cycles were individually detected, wherein the cycle curves of the first and sixteenth pouch lithium batteries are shown in FIG. 8.

Table 2. Electrical performance test results of the first to sixteenth pouch lithium batteries.

| No.: | First charge capacity (mAh/g) | First discharge capacity (mAh/g) | First charge-discharge efficiency (%) |
|---|---|---|---|
| First pouch lithium battery | 159.8 | 142.5 | 89.2 |
| Second pouch lithium battery | 157.9 | 140.1 | 88.7 |
| Third pouch lithium battery | 158.7 | 141.4 | 89.1 |
| Fourth pouch lithium battery | 157.6 | 139.3 | 88.4 |
| Fifth pouch lithium battery | 159.3 | 141.3 | 88.7 |
| Sixth pouch lithium battery | 158.6 | 141.2 | 89.0 |
| Seventh pouch lithium battery | 157.8 | 139.7 | 88.5 |
| Eighth pouch lithium battery | 159.4 | 142.3 | 89.3 |
| Ninth pouch lithium battery | 158.9 | 140.1 | 88.2 |
| Tenth pouch lithium battery | 156.7 | 136.5 | 87.1 |
| Eleventh pouch lithium battery | 156.2 | 136.5 | 87.4 |
| Twelfth pouch lithium battery | 156.9 | 136.3 | 86.9 |
| Thirteenth pouch lithium battery | 158.5 | 140.3 | 88.5 |
| Fourteenth pouch lithium battery | 150.8 | 129.1 | 85.6 |
| Fifteenth pouch lithium battery | 152.4 | 132.6 | 87.0 |
| Sixteenth pouch lithium battery | 156.4 | 134.2 | 85.8 |

It can be seen from Table 2 that the electrical performances of the first to thirteenth pouch lithium batteries are superior to those of the fourteenth to sixteenth pouch lithium batteries. Specifically, the first to thirteenth pouch lithium batteries have a higher initial capacity and a higher long-cycle capacity retention rate than those of the fourteenth to sixteenth pouch lithium batteries. In the case of the first and fourteenth pouch lithium batteries, the initial charge capacity of the first pouch lithium battery at 25°C and at a rate of 0.2C is 6% higher than those of the fourteenth pouch lithium battery, the initial discharge capacity of the first pouch lithium battery at 25°C and at a rate of 0.2C is 10.4% higher than those of the fourteenth pouch lithium battery, and the initial charge-discharge efficiency of the first pouch lithium battery at 25°C and at a rate of 0.2C is 3.6% higher than those of the fourteenth pouch lithium battery. Further, it can be seen from FIG. 8 that the performance of the first pouch lithium battery is significantly superior to that of the sixteenth pouch lithium battery under 45°C and 1C/1C cycles, indicating that the capacity retention of the first pouch lithium battery during the cycle is superior to that of the sixteenth pouch lithium battery.

In view of the above, for the lithium manganese iron phosphate materials according to the embodiments of the present disclosure, the material of the core includes Nb-doped lithium manganese iron phosphate, and the Nb-doping is beneficial for stabilizing the lattice of the lithium manganese iron phosphate and promoting the ordering of the cation arrangement, thereby improving the stability of the lithium manganese iron phosphate material and improving the long cycle capacity retention rate of the lithium manganese iron phosphate material. Moreover, the material of the coating layer includes any one or a combination of two of $LiNbO_3$ and $Li_3NbO_4$, which has a protective effect on the core, can alleviate or avoid the problem of Fe and Mn dissolution caused by the infiltration of the core by the electrolyte, and ensure that the lithium manganese iron phosphate material has good conductivity while effectively isolating from the electrolyte, based on the introduction of Li of high conductivity in the coating layer. The synergistic action of the core doped with Nb and the coating layer with any one or a combination of two of $LiNbO_3$ and $Li_3NbO_4$ can effectively enhance the rate, cycle and safety performance of the lithium manganese iron phosphate material.

The electrode sheet comprising the lithium manganese iron phosphate material according to the embodiments of the present disclosure has a higher compaction density than a positive electrode sheet comprising a conventional lithium manganese iron phosphate material.

The lithium battery comprising the positive active material layer made of the positive active material according to the embodiments of the present disclosure has a higher initial capacity and a higher cycle capacity retention rate than the lithium battery comprising the positive active material layer made of a conventional lithium manganese iron phosphate material.

**Claims**

1. A lithium manganese iron phosphate material comprising a core and a coating layer on the core, wherein a material of the core comprises Li, Fe, Mn, Nb and $PO_4$ in a non-stoichiometric ratio, and a material of the coating layer comprises at least one of $LiNbO_3$ and $Li_3NbO_4$.

2. The lithium manganese iron phosphate material according to claim 1, wherein the material of the core is $Li_aFe_xMn_yNb_z(PO_4)_b$,
in which a, x, y, z, and b represent molar amounts of Li, Fe, Mn, Nb, and $PO_4$ in the core, respectively, and satisfy at least one of the following:

$$0.2 < y \leq 0.9, \ 0 < z < 0.2, \ 0.9 < a/b < 1.1;$$

and

$$0.9 < (x+y+z)/b < 1.2, \ 0.9 < a/(x+y+z) < 1.1$$

3. The lithium manganese iron phosphate material according to any one of claims 1 or 2, wherein the lithium manganese iron phosphate material has a secondary spherical structure, and at least one of the following is satisfied:

   a particle size D50 of the lithium manganese iron phosphate material is 5 $\mu$m to 9 $\mu$m; and
   when a difference between a particle size D90 and a particle size D10 of the lithium manganese iron phosphate material is X, a ratio of X to the particle size D50 is 0.2 to 1.8.

4. The lithium manganese iron phosphate material according to any one of claims 1 to 3, wherein the coating layer has a thickness of 10 nm to 30 nm.

5. A method for preparing a lithium manganese iron phosphate material, comprising the following steps:

   dispersing a lithium source, a manganese source, an iron source, a phosphorus source, and a niobium source in a dispersion medium to form a first mixed system, and mixing the first mixed system with a complexing agent to form a gel; and
   sintering the gel under an atmosphere of a first protective gas to obtain the lithium manganese iron phosphate material.

6. The method according to claim 5, wherein the complexing agent is selected from one or more of polyacrylic acid, citric acid, polyacrylamide, hydrolyzed polymaleic anhydride, polyhydroxy acrylic acid, ethylenediaminetetraacetic acid, disodium ethylenediaminetetraacetic acid, tetrasodium ethylenediaminetetraacetic acid, sodium gluconate, and sodium alginate.

7. The method according to claim 5 or 6, wherein in the step of mixing the first mixed system with the complexing agent to form the gel, a molar ratio of metal cations in the first mixed system to the complexing agent is 1: (3 to 5).

8. The method according to any one of claims 5 to 7, wherein a molar ratio of Li: Mn: Fe: P: Nb in the first mixed system is a: x: y: z: b, and at least one of the following is satisfied:

$$0.2 < y \leq 0.9; \ 0 < z < 0.2; \ 0.9 < a/b < 1.1;$$

and

$$0.9 < (x+y+z)/b < 1.2, \ and \ 0.9 < a/(x+y+z) < 1.1$$

9. The method according to any one of claims 5 to 8, wherein the sintering is carried out at a temperature of 600°C to 800°C for 8 h to 12 h; or
the step of sintering the gel comprises subjecting the gel to a first sintering sub-treatment at a first temperature of 300°C to 500°C for 3 h to 5 h to obtain a pre-sintered material; and subjecting the pre-sintered material to a second sintering sub-treatment at a second temperature of 600°C to 800°C for 8 h to 12 h.

10. The method according to any one of claims 5 to 9, wherein the first protective gas is selected from one or more of nitrogen gas, argon gas, helium gas, neon gas, krypton gas and xenon gas.

11. The method according to any one of claims 5 to 9, wherein at least one of the following is satisfied:

the step of mixing the first mixed system with the complexing agent to form the gel comprises mixing the first mixed system with the complexing agent to obtain a second mixed system, and then stirring the second mixed system under an atmosphere of a second protective gas at 60°C to 90°C to form the gel, wherein the second protective gas is selected from one or more of nitrogen gas, argon gas, helium gas, neon gas, krypton gas, and xenon gas; and

the method further comprises, after the step of sintering and before the step of obtaining the lithium manganese iron phosphate material, pulverizing the sintered material, and then screening the pulverized material through a sieve of 150 mesh to 200 mesh to obtain the lithium manganese iron phosphate material.

12. The method according to any one of claims 5 to 10, wherein at least one of the following is satisfied:

the lithium source is selected from one or more of lithium oxide, lithium hydroxide, lithium carbonate, lithium sulfate, lithium nitrate, lithium acetate, lithium dihydrogen phosphate, lithium phosphate, and lithium oxalate;

the manganese source is selected from one or more of manganese monoxide, manganese tetroxide, manganese hydroxide, manganese carbonate, manganese phosphate, manganese oxalate, manganese nitrate, manganese acetate, manganese sulfate, and manganese chloride;

the iron source is selected from one or more of ferriferrous oxide, ferrous oxide, ferrous hydroxide, ferrous sulfate, ferrous chloride, ferrous phosphate, ferrous pyrophosphate, ferrous nitrate, ferrous acetate, and ferrous oxalate;

the phosphorus source is selected from one or more of phosphoric acid, ammonium phosphate, ammonium dihydrogen phosphate, potassium dihydrogen phosphate, sodium dihydrogen phosphate, and iron phosphate; and

the niobium source is selected from one or more of $NbO$, $NbO_2$, $Nb_2O_3$, and $Nb_2O_5$.

13. A lithium battery (1) comprising one or more battery cell units (11), wherein each of the battery cell units (11) comprises a positive electrode sheet (111), a separator (112), and a negative electrode sheet (113) which are stacked in sequence, the positive electrode sheet (111) comprises a positive current collector (1111) and a positive active material layer (1112) disposed on one or more surfaces of the positive current collector (1111), and the positive active material layer (1112) comprises a lithium manganese iron phosphate material;

wherein at least one of the following is satisfied:

the lithium manganese iron phosphate material comprises a core and a coating layer on the core, a material of the core comprises Li, Fe, Mn, Nb and $PO_4$ in a non-stoichiometric ratio, and a material of the coating layer comprises at least one of $LiNbO_3$ and $Li_3NbO_4$; and

a method for preparing the lithium manganese iron phosphate material comprises the following steps: dispersing a lithium source, a manganese source, an iron source, a phosphorus source, and a niobium source in a dispersion medium to form a first mixed system, and mixing the first mixed system with a complexing agent to form a gel; and sintering the gel under an atmosphere of a first protective gas to obtain the lithium manganese iron phosphate material.

14. The lithium battery according to claim 13, wherein when the material of the core is $Li_aFe_xMn_yNb_z(PO_4)_b$, a, x, y, z, and b represent molar amounts of Li, Fe, Mn, Nb, and $PO_4$ in the core, respectively, and satisfy at least one of the following:

$$0.2 < y \leq 0.9, \ 0 < z < 0.2, \ 0.9 < a/b < 1.1,$$

and

$$0.9 < (x+y+z)/b < 1.2, \ 0.9 < a/(x+y+z) < 1.1;$$

wherein at least one of the following is satisfied:

the lithium manganese iron phosphate material has a secondary spherical structure, and a particle size D50 of the lithium manganese iron phosphate material is 5 $\mu$m to 9 $\mu$m;
when a difference between a particle size D90 and a particle size D10 of the lithium manganese iron phosphate material is X, a ratio of X to the particle size D50 is 0.2 to 1.8; and
the coating layer has a thickness of 10 nm to 30 nm.

15. The lithium battery according to claim 13 or 14, wherein at least one of the following is satisfied:

the complexing agent is selected from one or more of polyacrylic acid, citric acid, polyacrylamide, hydrolyzed polymaleic anhydride, polyhydroxy acrylic acid, ethylenediaminetetraacetic acid, disodium ethylenediaminetetraacetic acid, tetrasodium ethylenediaminetetraacetic acid, sodium gluconate, and sodium alginate;
in the step of mixing the first mixed system with the complexing agent to form the gel, a molar ratio of metal cations in the first mixed system to the complexing agent is 1: (3 to 5); and
when a molar ratio of Li: Mn: Fe: P: Nb in the first mixed system is a: x: y: z: b, a, x, y, z, and b satisfy at least one of $0.2 < y \leq 0.9$, $0 < z < 0.2$, $0.9 < a/b < 1.1$; and $0.9 < (x+y+z)/b < 1.2$, $0.9 < a/(x+y+z) < 1.1$.

Dispersing a lithium source, a manganese source, an iron source, a phosphorus source, and a niobium source in a dispersion medium to form a first mixed system, and mixing the first mixed system with a complexing agent to form a gel    S1

Sintering the gel under an atmosphere of a first protective gas to obtain the lithium manganese iron phosphate material    S2

FIG. 1

10

FIG. 2

11

FIG. 3

<u>111</u>

1112

1111

1112

FIG. 4

FIG. 5

FIG. 6

FIG. 7

FIG. 8

Europäisches
Patentamt

European
Patent Office

Office européen
des brevets

# EUROPEAN SEARCH REPORT

**Application Number**

EP 24 20 5894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 014 122 A (EVE ENERGY CO LTD) 25 April 2023 (2023-04-25) * claims 1-10 * | 1-15 | INV. C01B25/45 C01G45/1221 H01M10/0525 H01M4/58 |
| X | CN 115 832 257 A (CHUNENG NEW ENERGY CO LTD) 21 March 2023 (2023-03-21) | 1,2,4-6, 8-15 | |
| A | * claims 1-10 * | 3,7 | |
| A | CN 108 878 873 A (NINGBO INST MATERIALS TECH & ENG CAS) 23 November 2018 (2018-11-23) * claims 1-10 * | 1-15 | |

| | TECHNICAL FIELDS SEARCHED (IPC) |
|---|---|
| | C01B C01G H01M |

The present search report has been drawn up for all claims

| Place of search | Date of completion of the search | Examiner |
|---|---|---|
| The Hague | 24 March 2025 | Gerwann, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 20 5894

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | | Publication date |
|---|---|---|---|---|---|
| CN 116014122 | A | 25-04-2023 | CN | 116014122 A | 25-04-2023 |
| | | | US | 2023411607 A1 | 21-12-2023 |
| | | | WO | 2024124725 A1 | 20-06-2024 |
| CN 115832257 | A | 21-03-2023 | NONE | | |
| CN 108878873 | A | 23-11-2018 | NONE | | |

EPO FORM P0459

For more details about this annex : see Official Journal of the European Patent Office, No. 12/82